## Europäisches Patentamt
## European Patent Office
## Office européen des brevets

(11) Veröffentlichungsnummer: **0 186 047**
**B1**

(12) # EUROPÄISCHE PATENTSCHRIFT

(45) Veröffentlichungstag der Patentschrift:
04.10.89

(51) Int. Cl.⁴: **C 08 F 285/00, C 08 L 57/00**

(21) Anmeldenummer: **85115780.0**

(22) Anmeldetag: **11.12.85**

(54) Kerbschlagzähe Thermoplastformmassen.

(30) Priorität: **22.12.84 DE 3447249**

(43) Veröffentlichungstag der Anmeldung:
**02.07.86 Patentblatt 86/27**

(45) Bekanntmachung des Hinweises auf die Patenterteilung:
**04.10.89 Patentblatt 89/40**

(84) Benannte Vertragsstaaten:
**DE FR GB IT**

(56) Entgegenhaltungen:
**EP-A-0 003 652**
**EP-A-0 034 748**
**FR-A-2 246 594**
**US-A-4 341 883**

**CHEMICAL ABSTRACTS, Band 100, Nr. 16, April 1984, Seite 39, Zusammenfassung Nr. 122166n, Columbus, Ohio, US; & JP-A-58 187 411**
**CHEMICAL ABSTRACTS, Band 78, Nr. 22, 4. Juni 1973, Seite 51, Zusammenfassung Nr. 137322m, Columbus, Ohio, US; & JP-A-72 42 987**

(73) Patentinhaber: **BAYER AG, D-5090 Leverkusen 1 Bayerwerk (DE)**

(72) Erfinder: **Lindner, Christian, Dr., Riehlerstrasse 200, D-5000 Köln 60 (DE)**
Erfinder: **Uerdingen, Walter, Dr., Humperdinckstrasse 41, D-5090 Leverkusen (DE)**
Erfinder: **Ott, Karl-Heinz, Dr., Paul-Klee-Strasse 54, D-5090 Leverkusen (DE)**
Erfinder: **Braese, Hans-Eberhard, Dipl.-Ing., Käthe-Kollwitz-Strasse 3, D-5000 Köln 71 (DE)**

**Beschreibung**

Die Erfindung betrifft thermoplastische Pfropfpolymerisate mit partikelförmiger Struktur und einem bestimmten schalenförmigen Aufbau aus speziellem Polymerisat.

Im Prinzip bestehen die Pfropfpolymerisate aus einem Acrylatkautschuk der 1. Hülle, der als Kern einen Dienkautschuk enthält sowie einer den Acrylatkautschuk umgebenden 2. Hülle aus Copolymerisat harzbildender Monomerer und spezieller Polyallylmonomerer und einer äußeren 3. Hülle aus gepfropftem Copolymerisat harzbildener Monomerer.

Bekannt sind kerbschlagzähe Polymerisate auf Acrylatkautschukbasis, die durch eine bestimmte Kern-Hüllen-Struktur in der Elastomerphase verbesserte Eigenschaften haben (EP-A-34 748).

Bekannt sind weiterhin (vgl. US-PS-3 944 631) Styrol-Acrylnitril-Pfropfpolymerisate auf vernetzte Acrylatkautschuke, in denen ein Teil des Styrol-Acrylnitril-Polymerisates vernetzt ist; solche Produkte besitzen Zähigkeit und Alterungsstabilität.

Es wurde gefunden, daß man weitere Produkteigenschaften verbessern kann, wenn man in den Pfropfpolymerisaten sowohl der Elastomerphase als auch der Harzphase einen bestimmten Gradienten- oder Schalenaufbau vorsieht, wobei spezielle Comonomere eingesetzt werden; derartige Polymerisate besitzen verbesserte Wärmestandfestigkeiten, auch in Kombination mit anderen spröden Harzen, verbesserte Verarbeitbarkeit und liefern Formkörper, insbesondere Folien, ohne Fehlstellen und Inhomogenitäten.

Gegenstand der Erfindung ist ein Verfahren zur Herstellung von teilchenförmigen Pfropfpolymerisaten, das dadurch gekennzeichnet ist, daß man in Anwesenheit von (b) 10 - 80 Gew.-%, bezogen auf Pfropfpolymerisat, eines teilchenförmigen stark vernetzten Acrylatkautschuks mit einem mittleren Teilchendurchmesser ($d_{50}$) von 0,2 - 1,0 µm, dessen Teilchen einen (a) Dienkautschukkern enthalten, (c) eine Mischung aus harzbildenden Vinylmonomeren und Polyallylmonomeren (mit wenigstens 3 Allylgruppen im Molekül) in Emulsion propfpolymerisiert und (d) das so gebildete Pfropfpolymerisat mit wenigstens einem weiteren Vinylmonomeren pfropfpolymerisiert, wobei die Summe aus (c) und (d) 90 - 20 Gew.-% des genannten Pfropfpolymerisats ausmacht.

Ein weiterer Gegenstand der Erfindung ist die Verwendung dieser teilchenförmigen Pfropfpolymerisate - gegebenenfalls im Gemisch mit spröden thermoplastischen Harzen, bevorzugt Copolymerisate von Styrol und Acrylnitril, α-Methylstyrol und Acrylnitril, Methylmethacrylathomo- oder Copolymerisaten oder Vinylchloridhomooder Copolymerisaten, - als thermoplastische Formmasse.

Ein weiterer Gegenstand der Erfindung sind somit teilchenförmige Pfropfpolymerisate, enthaltend einen Kern a), der einen vernetzten Dienkautschuk darstellt, eine erste Hülle b) die einen vernetzten Acrylkautschuk darstellt, eine zweite Hülle c), die ein Copolymerisat aus harzbildenden Monomeren und Polyallylmonomeren mit wenigstens drei Allylgruppen im Molekül darstellt und eine dritte Hülle d), die ein Copolymer oder Homopolymer aus harzbildenden Monomeren darstellt, die nach dem oben angegebenen Verfahren erhältlich sind.

Bevorzugt ist darin enthalten A) der Kern a) in Mengen von 0,5 bis 10 Gew.-%, bezogen auf das Gesamtgewicht von Kern a) und Hülle b), B) das Gesamtgewicht von Kern a) und Hülle b) ist 10 bis 80 Gew.-% (insbesondere 27 bis 70 Gew.-%), bezogen auf das gesamte Pfropfpolymerisat, C) die Teilchen aus Kern a) mit Hülle b) haben einen mittleren Durchmesser von 0,2 - 1 µm (insbesondere 0,4 - 0,6 µm) ($d_{50}$-Werte) und D) die Hülle c) weist die Mengen von 2,5 bis 20 Gew.-%, bezogen auf die Summe der Gewichte von Hülle c) und Hülle d) vor.

Das Material des Kerns (a) ist ein vernetzter Kautschuk aus einem oder mehreren konjugierten Dienen, wie Polybutadien oder ein Copolymerisat eines konjugierten Diens mit einem ethylenisch ungesättigten Monomer wie Styrol und/oder Acrylnitril.

Die erste Hülle (b) stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylester, beispielsweise Methyl-, Ethyl-, Butyl-, Octyl- und 2-Ethylhexylester, Halogenalkylestern, bevorzugt $C_1$-$C_8$-Halogenalkylester, wie Chlorethylacrylat, und aromatische Ester wie Benzylacrylat und Phenethylacrylat. Sie können einzeln oder in Mischung eingesetzt werden, wobei mindestens ein Alkylester im Gemisch vorhanden sein soll. Zur Vernetzung werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe, wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat; Triallylisocyanurat; Divinylverbindungen wie Divinylbenzol; Ester ungesättigter Carbonsäuren mit ungesättigten Alkoholen (bevorzugt 6 bis 12 Kohlenstoffatomen im Esterrest), wie Allylmethacrylat; Phosphorsäureester, beispielsweise Triallylphosphat und 1,3,5-Triacryloyl-hexahydro-s-triazin. Besonders bevorzugte polyfunktionelle Monomere sind Triallylcyanurat, Triallylisocyanurat, Triallylphosphat, Allylmethacrylat, Ethylenglykoldimethylacrylat und 1,3,5-Triacryloylhexahydro-s-triazin.

Die Menge der zur Vernetzung benutzten polyfunktionellen Monomeren ist bevorzugt 0,05 bis 5 Gew.-%, insbesondere 0,2 bis 3,0 Gew.-% der Masse der ersten Hülle (b). Das Elastomer der ersten Hülle (b) kann zusätzlich noch ein copolymerisierbares Monomeres oder mehrere solcher Monomerer vom Vinyl- oder Vinylidentyp einpolymerisiert enthalten. Beispiele sind: Methylmethacrylat, Butyacrylat, Acrylnitril, Styrol, α-Methylstyrol, Acrylamide, Vinylalkylether. Diese Comonomeren können in Mengen bis zu 40 Gew.-% des Polymerisates (b) einpolymerisiert werden. Die zweite Hülle (c) stellt ein pfropfpolymerisiertes Polymerisat aus harzbildenden Monomeren und Polyallylmonomeren mit wenigstens drei Allylgruppen im Molekül dar; dazu wird die Hülle hergestellt durch Copolymerisation von 99,9 - 90 Gew.-% (insb. 99 - 95 Gew.-%) harzbildender Monomerer und 0,1 - 10 (insbesondere 1 - 5) Gew.-% Polyallylmonomer.

Als harzbildende Monomere für die Hülle (c) sind geeignet: α-Methylstyrol, p-Methylstyrol, Styrol, Halogenstyrole, Acrylnitril, Methacrylnitril, Methylmethacrylat, Cyclohexylmethacrylat, Butylmethacrylat, Vinylchlorid, vorzugsweise Mischungen aus Styrol/Acrylnitril (im Verhältnis 90 : 10 bis 60 : 40), aus Methylmethacrylat/Acrylnitril und/oder Styrol (im Verhältnis 100 : 0 bis 50 : 50), aus α-Methylstyrol/Acrylnitril (im Verhältnis von 75 : 25 bis 65 : 35) und Terpolymerisate aus α-Methylstyrol, Acrylnitril und Methylmethacrylat; als Polyallylmonomere sind Verbindungen mit wenigstens drei Allylgruppen im Molekül geeignet; diese Monomere können cyclisch oder offenkettig sein; bevorzugt sind cyclische Monomere; bevorzugt sind weiterhin Monomere, die als ungesättigte, olefinische Gruppen nur Allylgruppen enthalten, also keine Vinyl- oder Vinylidengruppen. Als Allylgruppen werden folgende unsubstituierten Gruppierungen bezeichnet:

$$CH_2 = CH - CH_2$$

Solche Polyallylmonomere sind z. B. Triallylcyanurat, Triallylisocyanurat, Phosphorsäuretriallylester, Zitronensäureallylester, Triallyltriazin, Triallylbenzol, Polycarbonsäureallylester wie z. B. Polymethacrylsäureallylester, Pentaerythritallylester, Glycerintriallylether, Trisallyloxybenzole oder Polystyrole mit seitenständigen Allyl- oder Allyloxygruppen. Bevorzugt sind Triallylcyanurat oder Triallylisocyanurat.

Die dritte Hülle (d) stellt ein gepfropftes Polymerisat aus harzbildenden Monomeren dar. Als harzbildende Monomere sind hierbei geeignet: α-Methylstyrol, Styrol, Halogenstyrol, p-Methylstyrol, Acrylnitril, Methacrylnitril, Methylmethacrylat. Besonders bevorzugt sind Copolymere aus Styrol/Acrylnitril sowie Methylmethacrylat enthaltende Copolymerisate.

Die erfindungsgemäßen Pfropfpolymerisate können in wäßriger Emulsion wie folgt hergestellt werden: zunächst wird durch Emulsionspolymerisation eines konjugierten Diens der Dienkautschuk für den Kern (a) in Latexform hergestellt. Diese Polymerisation ist bekannt. Dann wird in Gegenwart dieses Latex, ebenfalls in wäßriger Emulsion, der Acrylatkautschuk für die erste Hülle (b) hergestellt, indem man die Monomeren (Hauptbestandteil wenigstens ein Acrylat) in dem Latex emulgiert und in an sich bekannter Weise mittels radikalbildender Initiatoren polymerisiert. Der Acrylatkautschuk polymerisiert auf dem Dienkautschuk; er kann durch Mitverwendung polyfunktioneller Monomerer bereits bei der Herstellung vernetzt werden.

Bei dieser Pfropfpolymerisation der ersten Hülle (b) muß die Bildung neuer Teilchen möglichst vollständig unterbunden werden. Ein Emulsionsstabilisator muß in zur Oberflächenbedeckung der Teilchen erforderlichen Menge vorhanden sein. Die Größe dieser Teilchen ist durch die Reaktionsführung in weiten Grenzen zu variieren. Verwendet man als Kern (a) einen agglomerierten Latex, um große Teilchen zu erhalten, so können diese mehrere Dienkautschukpartikel enthalten. Man kann die Polymerisation der ersten Hülle (b) auch so führen, daß Partikel mit Dienkautschukkern und gleichzeitig Partikel aus reinem vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks (Hülle (b)) wird auf den anfallenden Latex die zweite Hülle (c) pfropfpolymerisiert, indem man ein Gemisch aus den genannten harzbildenden Vinylmonomeren und Polyallylmonomeren im Sinne der Erfindung in den Latex einbringt und radikalisch mittels Radikalinitiatoren, insbesondere des wasserlöslichen Typs, pfropfpolymerisiert. Dabei kann so vorgegangen werden, daß bereits während der Pfropfpolymerisation der Hülle (c) mit der Pfropfpolymerisation der Hülle (d) begonnen wird. Dieses Vorgehen hat zur Folge, daß der Gehalt an Polyallylverbindung (als Comonomer der die Hülle (c) bildenden Monomeren) kontinuierlich in der Schicht (c) (oder besonders im Grenzbereich zwischen Schicht (c) und Schicht (d)) abnimmt: In den erfindungsgemäßen Pfropfpolymerisaten liegt also ein unscharfer Übergang zwischen Hülle (c) und Hülle (d) vor und der Aufbau der Hülle muß sich somit von solchen Hüllen unterscheiden, bei denen erst nach vollständig abgelaufener Pfropfpolymerisation von (c) mit der Pfropfpolymerisation von (d) begonnen wird.

Unter Pfropfpolymerisation der die thermoplastische Hülle (d) bildenden Vinylmonomere auf die vorgebildeten Latexpartikel aus (a), (b) und anteilmäßigem (c) werden - wie bereits gesagt - Vinylmonomere in Emulsion radikalisch polymerisiert, wobei normalerweise Temperaturen von 40 - 90°C, insbesondere 50 - 75°C, besonders geeignet sind.

Weiterhin ist zu erwähnen, daß nicht nur (d) auf (c), sondern auch (c) auf (b) und (b) auf (a) pfropfpolymerisiert vorliegen. Bei den Polymerisationen im Sinne der Erfindung bilden sich die erfindungsgemäßen Pfropfpolymerisate unter Ausbildung der verschiedenen Hüllen. Bei diesen an sich bekannten Pfropfpolymerisationen, die üblicherweise in Gegenwart von Radikalstartern, z. B. wasserlöslichen Initiatoren, Emulgatoren oder Komplexbildnern sowie Reglern durchgeführt werden, bilden sich im allgemeinen neben dem Pfropfpolymerisat im bestimmten Ausmaß freie Polymerisate bzw. Copolymerisate der die Hülle bildenden Monomeren. Die Menge dieses ungepfropften Polymerisats kann durch den Pfropfgrad bzw. die Pfropfausbeute charakterisiert werden, sie hängt ab u. a. von den Polymerisationsbedingungen, der Zusammensetzung der Pfropfbasis, der Größe der zu pfropfenden Teilchen, und der Menge an Pfropfbasis. "Pfropfpolymerisat" im Sinne der Erfindung ist deshalb das durch Polymerisation von Vinylmonomeren in Gegenwart des Kautschuklatex erhaltene Produkt, genau genommen also ein Gemisch aus Pfropfpolymerisat und freiem Copolymerisat der Pfropfmonomeren.

Die so hergestellten Pfropfpolymerisate können nach bekannten Verfahren aufgearbeitet werden. z. B. durch Koagulation der Latices mit Elektrolyten (Salze, Säuren oder Gemische davon und anschließende Reinigung und Trocknung) oder durch Sprühtrocknung.

Die erfindungsgemäßen Pfropfpolymerisate sind kerbschlagzähe thermoplastische Formmassen hoher Witterungsund Alterungsbeständigkeit mit verbesserter Wärmeformbeständigkeit und verbesserter Verarbeitbarkeit. Insbesondere war es überraschend, daß durch die Gegenwart der Hülle (c) in der erfindungsgemäßen Pfropfpolymerisation deren thermoplastische Verarbeitung - über den geschmolzenen Zustand - nicht beeinträchtigt wird, sondern sich positiv auf die Oberflächeneigenschaften von z. B. spritzgegossenem oder extrudierten Formkörpern auswirkt. Beispielsweise ist bei den Extrusionen zu Folien mit der Bildung von Stippen zu rechnen, welche sich sehr nachteilig auf das Festigkeitsniveau der Folie auswirken können. Die erfindungsgemäßen Pfropfpolymerisate haben deutlich geringere Neigung zur Stippenbildung. Die geschilderten Vorteile treten gegenüber bekannten Acrylatkatuschuk-Formmassen insbesondere in Erscheinung, wenn man zum Aufbau der Hülle (c) die speziellen Polyallylmonomeren einsetz.

Das erfindungsgemäße Pfropfpolymerisat kann direkt ab-Formmasse verwendet werden, wenn es zu etwa 5 bis 40 Gew.-% aus Kern (a) und erster Hüolle (b), bezogen auf das gesamte Pfropfpolymerisat, besteht. Wenn der Gehalt an (a) plus (b) höher ist, kann ein sprödes Harz zugemischt werden. Spröde Harze sind vorzugsweise Styrol-, Methylmethacrylat-, Acrylnitril-Terpolymere, Styrol-, bzw. Methylstyrol-, Acrylnitril-Terpolymer oder Methylmethacrylat-Homo- bzw. Copolymere sowie Vinylchloridhomo- oder Copolymerisate.

Die erfindungsgemäßen Formmassen können Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie auch als Außenschicht eines Laminats aus mehreren verschiedenen Polymeren dienen.

Teile und Prozentangaben in den folgenden Ausführungsbeispielen sind immer Gewichts-Teile und Gewichts-Prozent.

## Beispiele

### 1. Herstellung eines erfindunggemäßen Pfropfpolymerisates

#### 1.1 Polydienlatex (Kern (a))

In einem Reaktor wird unter Rühren folgende Emulsion bei 65°C bis zum praktisch vollständigen Monomerumsatz innerhalb von ca. 22 Std. polymerisiert:

| | | |
|---|---|---|
| 90,0 | Gew.-Teile | Butadien |
| 10,0 | " | Styrol |
| 1,8 | " | Na-Salz der disproportionierten Abietinsäure |
| 0,257 | " | Natriumhydroxid |
| 0,3 | " | n-Dodecylmercaptan |
| 1,029 | " | Na-ethylendiamin-tetra-acetat |
| 0,023 | " | Kaliumpersulfat |
| 122 | " | Wasser |

Es wird ein Latex erhalten, der Butadien/Styrol-Copolymerisat-teilchen eines mittleren Durchmessers ($d_{50}$) von 0,1 μ in einer Konzentration von ca. 40 % enthält. (Der mittlere Durchmesser $d_{50}$ ist derjenige oberhalb dessen und unterhalb dessen je 50 Gew.-% alter Teilchen liegen).

#### 1.2 Acrylatkautschuklatex mit Polydienkern (Kern (a) und Hülle (b))

In einem Reaktor werden vorgelegt: 9,5 Gew.-T. des Latex 1,1 und 286 Gew.- Wasser. Nach Aufheizen auf 65°C werden 22 Gew.-Tl. der Lösung 1) eingegeben und danach mittels einer Lösung von 0,75 Gew.-Tl. Kaliumperoxidisulfat in 18 Gew.-Tl. Wasser initiiert. Anschließend werden der Rest der Lösung 1) und die Lösung 2) gleichmäßig innerhalb von 5 Std. in den Reaktor bei 65°C eindosiert. Nach Zudosierende wird 4 Std. bei 65°C auspolymerisiert.

Es wird ein Latex erhalten, der das Polymer in einer Konzentration von 37 Gew.-% enthält, der mittlere Teilchendurchmesser ($d_{50}$-Wert) beträgt 0,42 μm.

| | | | |
|---|---|---|---|
| Lösung 1: | n-Butylacrylat | 575 | Gew.-Tl. |
| | Triallylcyanurat | 0,914 | Gew.-Tl. |
| | | | |
| Lösung 2: | Lewatitwasser | 640 | Gew.-Tl. |
| | Na-C14-18-Alkylsulfonat | 5,4 | Gew.-Tl. |

### 1.3 Herstellung der restlichen Hüllen (c) und (d)

In einem Reaktor werden vorgelegt: 47 Gew.-Tl. des Latex 1,2 und 57 Gew.-Tl. Wasser. Nach Aufheizen auf 75°C gibt man folgende Monomerlösung in den Reaktor ein:

| | | |
|---|---|---|
| Styrol | 3,465 | Gew.-Tl. |
| Acrylnitril | 1,785 | " |
| Triallyl-Cyanurat | 1,105 | " |

Anschließend initiiert man die Polymerisation durch Zugabe einer Lösung von 0,49 Gew.-Tl. Kaliumperoxidisulfat in 10 Gew.-Tl. Wasser.

Anschließend daran werden folgende Lösungen gleichmäßig bei 75°C innerhalb von 7 Std. in den Reaktor eindosiert:

| | | | |
|---|---|---|---|
| Lösung 1: | Styrol | 31,4 | Gew.-Tl. |
| | Acrylnitril | 16,2 | " |
| Lösung 2: | Wasser | 45 | " |
| | Na-C14-18-Alkylsulfonat | 1,05 | " |

Zur Beendigung der Polymerisation wird 4 Stunden bei 75°C nachgerührt.
Der resultierende Latex hat einen Feststoffgehalt von 33 Gew.-%.
Zur Aufarbeitung des Polymeren siehe Abschnitt 8.

### 2. Vergleich: Pfropfpolymerisat ohne Hülle (c)

In einem Reaktor werden vorgelegt: 47 Gew.-Tl. des Latex 1,2 und 57 Gew.-Tl. Wasser. Nach Aufheizen auf 75°C gibt man eine Lösung von 0,49 Gew.-Tl. Kaliumperoxidisulfat in 10 Gew.-Tl. Wasser in den Reaktor. Anschließend werden folgende beiden Lösungen gleichmäßig bei 75°C innerhalb von 7 Std. in den Reaktor eindosiert:

| | | |
|---|---|---|
| Lösung 1: | Styrol | 34,95 Gew.-Tl. |
| | Acrylnitril | 18,00 " |
| Lösung 2: | Wasser | 45 Gew.-Tl. |
| | Na-C14-18-Alkylsulfonat | 1,05 " |

Zur Beendigung der Polymerisation wird 4 Std. bei 75°C nachgerührt.
Der resultierende Latex hat einen Feststoffgehalt von 33 Gew.-%.
Zur Aufarbeitung des Polymeren siehe Abschnitt 8.

### 3. Vergleich: Pfropfpolymerisat, hergestellt nach einem nicht erfindungsgemäßen Verfahren

In einem Reaktorkolben werden vorgelegt: 47 Gew.-Tl. des Latex 1,2 und 57 Gew.-Tl. Wasser. Nach Aufheizen auf 75°C gibt man folgende Monomerlösung in den Reaktor ein:

| | |
|---|---|
| Styrol | 3,465 Gew.-Tl. |
| Acrylnitril | 1,785 " |
| Triallylcyanurat | 0,105 " |

Anschließend initiiert man die Polymerisation durch Zugabe einer Lösung von 0,45 Gew.-Tl. Kaliumperoxidisulfat in 10 Gew.-Tl. Wasser. Nach 1,5 Std. Polymerisationszeit haben die Monomeren auspolymerisiert.
Dann werden folgende Lösungen gleichmäßig bei 75°C innerhalb von 7 Std. in den Reaktor eindosiert, wobei die Polymerisation durch Zugabe von 0,1 Gew.-Tl. Kaliumperoxidisulfat in Wasser nachaktiviert wird:

| | | |
|---|---|---|
| Lösung 1: | Styrol | 31,4 Gew.-Tl. |
| | Acrylnitril | 16,2 " |
| Lösung 2: | Wasser | 45 " |
| | Na-C14-18-Alkylsulfonat | 1,05 " |

Zur Beendigung der Polymerisation wird 4 Std. bei 75°C nachgerührt. Der resultierende Latex hat einen Polymerfeststoffgehalt von 33 Gew.-%.
Zur Aufarbeitung siehe Abschnitt 8.

4. Vergleich: Pfropfpolymerisate ohne Polyallylverbindung

Die Verfahrensweise gemäß 1 wird wiederholt; dabei wird folgende Änderung getroffen:
In der Stufe 1,3 werden anstatt 0,105 Gew.-Tl. Triallylcyanurat 0,105 Gew.-Tl. Butylenglykoldiacrylat eingesetzt.

5. Herstellung eines erfindungsgemäßen Pfropfpolymerisates

Die Verfahrensweise gemäß 1. wird wiederholt, aber in der Stufe 1,3 bei der Lösung 1) anstatt Styrol/Acrylnitril 47,6 Gew.-Tl. Methylmethacrylat eingesetzt.

6. Herstellung eines erfindungsgemäßen Pfropfpolymerisates
6.1 Nach Vorschrift 1,1 wird bei 60 - 68°C innerhalb von ca. 110 Std. folgende Emulsion polymerisiert:

| | | |
|---|---|---|
| 100 | Gew.-Tl. | Butadien |
| 70 | " | Wasser |
| 1,146 | " | Na-Salz der disproportionierten Abietinsäure |
| 0,055 | " | Ethylendiamintetraessigsaures Natrium |
| 0,137 | " | Natriumhydroxid |
| 0,028 | " | Natriumhydrogencarbonat |
| 0,282 | " | Kaliumpersulfat |

Es wird ein Latex erhalten, der Polybutadienteilchen eines mittleren Durchmessers ($d_{50}$) von 0,4 µm in einer Konzentration von 58 % enthält.
6.2. In einem Reaktor werden bei 65°C vorgelegt:

| | | |
|---|---|---|
| 2168 | Gew.-Tl. | Latex 6,1 |
| 9500 | " | Wasser |
| 27 | " | Kaliumpersulfat |
| 1700 | " | Wasser |

Innerhalb von 4 Std. werden bei 65°C folgende Mischungen in den Reaktor getrennt eindosiert:

| Lösung 1: | n-Butylacrylat | 9214 Gew.-Tl. |
|---|---|---|
| | Triallylcyanurat | 15 Gew.-Tl. |

| Lösung 2: | Wasser | 6600 Gew.-Tl. |
|---|---|---|
| | Na-Sulfonat von C14.18-KW | 156 Gew.-Tl. |

Anschließend läßt man 4 Std. bei 65°C auspolymerisieren. Der gebildete Latex besitzt eine breite Teilchenverteilung von 0,2 - 0,9 µm und einen Feststoff von 35 Gew.-%.
6.3 In einem Reaktor werden vorgelegt: 50 Gew.-Tl. des Latex 6.2 und 60 Gew.-Tl. Wasser. Nach Aufheizen auf 70°C gibt man folgende Monomerlösung in den Reaktor ein:

| | | |
|---|---|---|
| Styrol | 3,8556 | Gew.-Tl. |
| Acrylnitril | 1,2994 | " |
| Triallylcyanurat | 0,20 | " |

Anschließend initiiert man die Polymerisation durch Zugabe einer Lösung von 0,6 Gew.-Tl. Kaliumperoxidisulfat in 10 Gew.-Tl. Wasser.
Im Anschluß daran werden folgende Lösungen gleichmäßig bei 70°C innerhalb von 6 Std. in den Reaktor eindosiert:

| Lösung 1: | Styrol | 34,3 Gew.-Tl. |
|---|---|---|
| | Acrylnitril | 13,3 " |

| Lösung 2: | Wasser | 45 " |
|---|---|---|
| | Na-C14-18-Alkylsulfonat | 1,5 Gew.-Tl. |

Zur Beendigung der Polymerisation wird 4 Std. bei 75°C nachgerührt. Der resultierende Latex hat einen Polymerfeststoffgehalt von 34 Gew.-%. Das Polymerisat wird entsprechend Abschnitt 8 aufgearbeitet.
7. Vorschrift 6.2 wird wiederholt, mit der Änderung, daß anstatt Latex 6.1 die entsprechende Menge Wasser in den Reaktor vorgelegt wird. Anschließend wird weiterverfahren wie bei 6.2.

### 8. Aufarbeitung der Pfropfpolymerisatemulsionen

Die Emulsionen werden nach Stabilisierung mit 1,2 Gew.-Tl. phenolischen Antioxidanzien, bezogen auf 100 Tl. Polymerisat, mit einer Koagulationslösung aus Mg-Sulfat und Essigsäure gefällt, gewaschen mit Wasser und danach getrocknet. Die resultierenden Polymerisatpulver werden danach thermoplastisch verarbeitet.

### 9. Prüfmethodik

Aus dem Pulver werden nach Granulierung bei 220°C Nornkleinstäbe hergestellt und diese nach DIN-Methoden auf Kerbschlagzähigkeit, Härte und Wärmestandfestigkeit (Vicat B) untersucht.

**Tabelle 1**

| Polymerisat | Kerbschlag-zähigkeit 23°C (kg/m2) | Kugelaus druckhärte (39 s) | Wärmeform-beständigkeit Vicat B (°C) | Oberfläche einer extrudierten Folie (Stippen)*) |
|---|---|---|---|---|
| 1 | 13 | 88 | 95 | stippenfrei |
| 2**) | 12,8 | 85 | 90 | stippenhaltig |
| 3**) | 11,0 | 90 | 90 | stippenhaltig |
| 4**) | 11,1 | 91 | 90 | stippenhaltig |
| 5 | 14,5 | 84 | 94 | stippenfrei |
| 6 | 15,3 | 88 | 95 | stippenfrei |
| 7**) | 13 | 90 | 90 | Stippen und Schlieren |

*) visuell beurteilt
**) Vergleichsversuch

Wie ersichtlich, zeichnen sich Formmassen auf der Basis der erfindungsgemäßen Pfropfpolymerisate 1, 5 und 6 durch bessere mechanische Eigenschaften und Oberflächengüte aus.

### 10. Formmassen, enthaltend erfindungsgemäße Pfropfpolymerisate und PVC

50 Gew.-Tl. Suspensions-PVC (mit einem K-Wert von 70) 15 Gew.-Tl. Trimellitsäure-C 1-C 11-alkylester, 10 Gew.-Tl. eines Copolymeren aus 70 Gew.-% Vinylacetat und 30 Gew.-% Ethylen und ein Pfropfpolymerisat (50 Gew.-Tl.) werden auf bei 180°C 15 min. gewalzt. Der resultierende Compound wird danach bei 190°C zu einer Folie einer Dicke von 1 mm verpreßt. Die Eigenschaften der Folien sind in Tabelle 2 wiedergegeben.

**Tabelle 2**

| Compound auf Basis von Pfropfpolymer | Dehnung R % | Shore Härte °C | Vicat-A (°C) Erweichungstemp. |
|---|---|---|---|
| 1 | 26 | 62 | 87 |
| 2 | 24 | 60 | 80 |

Wie ersichtlich, besitzt eine PVC-Formmasse auf der Basis der erfindungsgemäßen Pfropfpolymerisates 1 eine verbesserte Erweichungstemperatur, bei guten restlichen Produkteigenschaften.

**Patentansprüche**

1. Verfahren zur Herstellung von teilchenförmigen Pfropfpolymerisaten, dadurch gekennzeichnet, daß man in Anwesenheit von (b) 10 - 80 Gew.-%, bezogen auf das Pfropfpolymerisat, eines teilchenförmigen stark vernetzten Acrylatkautschuks mit einem mittleren Teilchendurchmesser ($d_{50}$) von 0,2 - 1,0 µm, dessen Teilchen einen (a) Dienkautschukkern enthalten, (c) eine Mischung aus harzbildenden Vinylmonomeren und Polyallylmonomeren (mit wenigstens 3 Allylgruppen im Molekül in Emulsion pfropfpolymerisiert und (d) das so gebildete Pfropfpolymerisat mit wenigstens einem weiteren Vinylmonomeren pfropfpolymerisiert, wobei die Summe aus (c) und (d) 90 - 20 Gew.-% des genannten Pfropfpolymerisats ausmacht.

2. Verwendung der teilchenförmigen Pfropfpolymerisate gemäß Anspruch 1 - gegebenenfalls im Gemisch mit spröden thermoplastischen Harzen - als thermoplastische Formmasse.

3. Verwendung nach Anspruch 2, worin das spröde thermoplastische Harz ein Copolymerisat von Styrol und Acrylnitril, α-Methylstyrol und Acrylnitril, Methylmethacrylathomo- oder Copolymerisate oder Vinylchloridhomo- oder Copolymerisate ist.

4. Teilchenförmige Pfropfpolymerisate aus einem Kern a), der einen vernetzten Dienkautschuk darstellt, einer ersten Hülle b), die einen vernetzten Acrylatkautschuk darstellt, einer zweiten Hülle c), die ein Copolymerisat aus harzbildenden Monomeren und Polyallylmonomeren mit wenigstens drei Allylgruppen im Molekül darstellt und einer dritten Hülle d), die ein Copolymer oder Homopolymer aus harzbildenden Monomeren darstellt, erhältlich nach dem Verfahren gemäß Anspruch 1.

5. Teilchenförmige Pfropfpolymerisate nach Anspruch 4, in denen der Kern a) in Mengen von 0,5 bis 10 Gew.-%, bezogen auf das Gesamtgemisch von Kern a) und Hülle b) vorliegt.

6. Teilchenförmige Pfropfpolymerisate nach Anspruch 4, in denen die Gesamtmenge von Kern a) und Hülle b) 10 - 80 Gew.-%, des gesamten Pfropfpolymerisates ausmachen, und die Teilchen aus Kern a) und Hülle b) einen mittleren Durchmesser ($d_{50}$) von 0,2 - 1 µm aufweisen.

7. Teilchenförmige Pfropfpolymeisate nach Anspruch 4, in denen die Hülle c) in Mengen von 2,5 bis 20 Gew.%, bezogen auf die Summe der Gewichte von Hülle c) und Hülle d) vorliegen.

## Claims

1. A process for the production of particulate graft polymers, characterized in that, in the presence of (b) 10 to 80 % by weight, based on the graft polymer, of a particulate highly crosslinked acrylate rubber having an average particle diameter ($d_{50}$) of 0.2 to 1.0 µm, of which the particles contain (a) a diene rubber core, (c) a mixture of resin-forming vinyl monomers and polyallyl monomers (containing at least 3 allyl groups in the molecule) is graft-polymerized in emulsion and (d) the resulting graft polymer is graft-polymerized with at least one other vinyl monomer, the sum of (c) and (d) making up from 90 to 20 % by weight of the graft polymer mentioned.

2. The use of the particulate graft polymers claimed in claim 1, optionally in admixture with brittle thermoplastic resins, as thermoplastic moulding compounds.

3. The use claimed in claim 2, in which the brittle thermoplastic resin is a copolymer of styrene and acrylonitrile, α-methyl styrene and acrylonitrile, methyl methacrylate homo- or copolymers or vinyl chloride homopolymers or copolymers.

4. Particulate graft polymers of a core a) in the form of a crosslinked diene rubber, a first shell b) in the form of a crosslinked acrylate rubber, a second shell (c) in the form of a copolymer of resin-forming monomers and polyallyl monomers containing at least three allyl groups in the molecule and a third shell d) in the form of a copolymer or homopolymer of resin-forming monomers, obtainable by the process claimed in claim 1.

5. Particulate graft polymers as claimed in claim 4, in which the core a) is present in quantities of from 0.5 to 10 % by weight, based on the total mixture of core a) and shell b).

6. Particulate graft polymers as claimed in claim 4, in which the total quantity of core a) and shell b) makes up from 10 to 80 % by weight of the graft polymer as a whole and the particles of core a) and shell b) have an average diameter ($d_{50}$) of from 0.2 to 1 µm.

7. Particulate graft polymers as claimed in claim 4, in which the shell c) is present in quantities of from 2.5 to 20 % by weight, based on the sum of the weights of shell c) and shell d).

## Revendications

1. Procédé de préparation de polymères greffés en particules, caractérisé en ce que l'on soumet à polymérisation greffée en émulsion, en présence de b) 10 à 80 % en poids, par rapport au polymère greffé, d'un caoutchouc d'acrylate fortement réticulé en particules à un diamètre de particule moyen $d_{50}$ de 0,2 à 1,0 µm, dont les particules contiennent a) un noyau de caoutchouc diénique, c) un mélange de monomères vinyliques résinifiables et de monomères polyallyliques (contenant au moins trois groupes allyle dans la molécule) et d) on soumet le polymère greffé ainsi obtenu à polymérisation greffée avec au moins un autre monomère vinylique, étant spécifié que la somme de c) et d) représente de 90 à 20 % du poids du polymère greffé en question.

2. Utilisation des polymères greffés en particules selon la revendication 1 - éventuellement en mélange avec des résines thermoplastiques cassantes - en tant que matières à mouler thermoplastiques.

3. Utilisation selon la revendication 2, dans laquelle la résine thermoplastique cassante est un copolymère du styrène et de l'acrylonitrile, de l'α-méthylstyrène et de l'acrylonitrile, un homo- ou co-polymère du méthacrylate de méthyle ou un homo- ou co-polymère du chlorure de vinyle.

4. Polymères greffés en particules formées d'un noyau a) qui consiste en un caoutchouc diénique réticulé, une première enveloppe b) qui consiste en un caoutchouc d'acrylate réticulé, une deuxième enveloppe c) qui consiste en un copolymère de monomères résinifiables et de monomères polyallyliques contenant au moins trois groupes allyle dans la molécule, et une troisième enveloppe d) qui consiste en un copolymère ou en un homopolymère de monomères résinifiables, tels qu'obtenus par le procédé selon la revendication 1.

5. Polymères greffés en particules selon la revendication 4, dans lesquels le noyau a) est présent en quantité de 0,5 à 10 % en poids, par rapport au mélange total du noyau a) et de l'enveloppe b).

6. Polymères greffés en particules selon la revendication 4, dans lesquels la quantité totale du noyau a) et de l'enveloppe b) représente de 10 à 80 % du poids du polymère greffé total, et les particules consistant en le noyau a) et l'enveloppe b) ont un diamètre moyen $d_{50}$ de 0,2 à 1 μm.

7. Polymères greffés en particules selon la revendication 4, dans lesquels l'enveloppe c) est présente en quantité de 2,5 à 20 % en poids, par rapport à la somme des poids de l'enveloppe c) et de l'enveloppe d).